# EUROPÄISCHE PATENTSCHRIFT

(11) **EP 0 525 339 B1**
(45) Veröffentlichungstag und Bekanntmachung des Hinweises auf die Patenterteilung: **08.02.1995**
(21) Anmeldenummer: 92109640.0
(22) Anmeldetag: 09.06.1992
(51) Int. Cl.: F16L 47/02

(54) **Formteil aus thermoplastischem Material**
Moulded article of thermoplastic material
Article en matière thermoplastique

(30) Priorität: 22.07.1991 CH 2189/91
(43) Veröffentlichungstag der Anmeldung: 03.02.1993
(73) Patentinhaber: Georg Fischer Rohrleitungssysteme AG, CH-8201 Schaffhausen (CH)
(72) Erfinder: Trösch, Paul, CH-8203 Schaffhausen (CH); Porfido, Erasmo, CH-8200 Schaffhausen (CH); Schnetzler, Kurt, CH-8213 Neunkirch (CH)
(74) Vertreter: Szilagyi, Marianne

(56) Entgegenhaltungen:
- EP-A- 0 145 581
- EP-A- 0 170 844
- EP-A- 0 382 593
- FR-A- 2 445 209
- PATENT ABSTRACTS OF JAPAN vol. 16, no. 181 (M-1242) 30. April 1992 & JP-A-40 19 494 (KUBOTA CORP.) 23. Januar 1992

## Beschreibung

Die Erfindung betrifft ein Formteil aus thermoplastischen Material, wie es im Oberbegriff von Anspruch 1 beschrieben ist.

Durch die EP-A1-0253966 ist ein Formteil der eingangs genannten Art bekanntgeworden welches zum Vorfixieren des in das Formteil eingesteckten Rohres in axialer Richtung und zur Beseitigung des radialen Spieles vor dem Erstellen der Schweissverbindung ein Spannelement aufweist, das entweder als Spannmutter mit einer konischen Klemmpartie oder als am Aussenumfang der Muffenpartie angeordnetes Spannband bzw. Spannbride ausgebildet ist. Die Drahtenden der Heizvorrichtung, welche aus zwei zueinander parallel geschalteten Heizmatten besteht, sind stirnseitig aus dem Formteil herausgeführt. Die Anordnung einer festen Steckverbindung an Aussenumfang der Muffe für eine schnelle Verbindung mit einem Schweissgerät ist durch den Platzbedarf für das Spannelement nicht oder nur, durch Verlängerung des Formkörpers möglich.

Ausserdem ist die Herstellung der Formteile durch die Art der Spannelemente und die Ausbildung der Heizvorrichtung sehr aufwendig.

Aufgabe der vorliegenden Erfindung ist die Schaffung eines Formteiles der eingangs genannten Art, bei welchem durch einfache Mittel eine Fixierung des eingestellten Rohres vor dem Verschweissen möglich ist, wobei gleichzeitig durch deren Ausbildung die Anordnung einer Steckverbindung für den Anschluss der Heizvorrichtung an das Schweissgerät ohne grossen baulichen Aufwand ermöglicht wird.

Die Aufgabe wird durch die kennzeichnenden Merkmale von Anspruch 1 gelöst.

Besonders vorteilhafte Ausbildungen der Erfindung sind in den abhängigen Ansprüchen gekennzeichnet.

Die erfindungsgemässen Merkmale ermöglichen eine einfache Ausbildung der für die Fixierung und Klemmung des eingesteckten Rohres vor dem Schweissen erforderlichen Spannvorrichtung, da nur handelsübliche Schrauben benötigt werden. Ausserdem ermöglicht die erfindungsgemässe Lösung die Anordnung einer Steckverbindung am Muffenende zum Anschluss der Heizwicklung an ein Schweissgerät.

Die Erfindung ist in den beiliegenden Zeichnungen anhand von Ausführungsbeispielen dargestellt und nachfolgend beschrieben. Es zeigen
- Fig. 1: ein als Muffe ausgebildtes Formteil im Längsschnitt
- Fig. 2: eine Seitenansicht von Fig. 1 mit einem Teilschnitt
- Fig. 3: eine Draufsicht auf Fig. 1 und
- Fig. 4: eine Ausführungsvariante eines Formteils gemäss Fig. 1

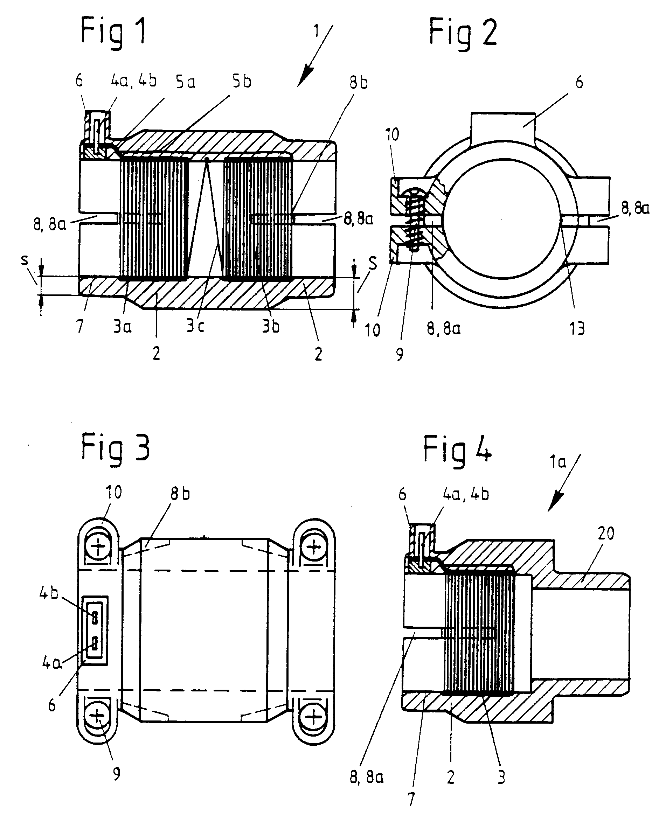

Die Fig. 1 bis 3 zeigen ein als Muffe ausgebildetes Formteil 1 aus thermoplastischen Material zum Verbinden zweier Rohre mittels Schweissung durch eine elektrische Heizvorrichtung.

Das Formteil 1 weist für jedes zu verbindende Rohr eine Schweissmuffen-Partie 2 auf, an deren Innenumfang eine schraubenförmig gewundene Heizvorrichtung 3 angeordnet ist. Gemäss Fig. 1 sind zwei Heizwicklungen 3a, 3b mit axialer Distanz zueinander angeordnet aber durch eine Windung 3c mit grösserer Steigung miteinander verbunden. Die Heizvorrichtung kann auch nur eine durchgehende Heizwicklung 3 aufweisen. Die Heizwicklungen 3 bestehen aus einem Widerstandsdraht. Er kann auch mit einer hitzebeständigen Isolierschicht versehen sein. Zusätzlich kann der Widerstandsdraht mit einem möglichst dem Material des Formteiles entsprechenden thermoplastischen Material ummantelt sein.

Das vordere Ende der Heizwicklung 3a ist mittels eines Verbindungsleiters 5a mit einem am Aussenumfang eines Muffenendes angeordneten Steckkontakt 4a und das hintere Ende der Heizwicklung 3b mittels eines Verbindungsleiters 5b mit einem Steckkontakt 4b verbunden, wobei die beiden Steckkontakte 4a, 4b umfangsmässig nebeneinander von einer Wand 6 des Formteiles 1 umgeben geschützt angeordnet sein können.

Der Verbindungsleiter 5b verläuft in Längsrichtung des Formteiles 1 die Heizwicklungen 3a, 3b bzw. 3 kreuzend vorzugsweise mit Distanz zu diesen innerhalb des Formteiles.

Zwischen dem Muffenende und dem Beginn der Heizwicklung 3a, 3b befindet sich eine Klemmpartie 7, welche durch die Anordnung von Einschnitten 8 und Schrauben 9 radial gegen das eingesteckte Rohr verspannbar ist. Die Klemmpartie 7 kann zylindrisch oder auch konisch ausgebildet sein.

Im gezeigten Ausführungsbeispiel sind die Einschnitte 8 als bis zum Innenumfang durchgehende Schlitze 8a ausgebildet, wobei zwei Schlitze 8a einander radial gegenüberliegend angeordnet sind und die Schrauben 9 senkrecht zu den radialen Schlitzen 8a angeordnet sind. Die Schlitze 8a verlaufen dabei in einer Ebene, welche zur Spannrichtung senkrecht verläuft. Beidseits jedes Schlitzes 8a sind am Aussenumfang Flansche 10 angeformt, wobei die Schraube 9 in einem Durchgangsloch 11 eines Flansches 10 steckend in den anderen Flansches 10 eingeschraubt ist. Mittels den Schrauben 9 ist ein einfaches Verspannen der Klemmpartie 7 gegeben.

Vorzugsweise werden selbstschneidende Schrauben 9 verwendet, welche beim Einschrauben in ein Kernloch des Flansches 10 gleichzeitig ein Gewinde erzeugen. Es können auch durchgehende Schrauben mit einer Mutter eingesetzt werden.

Durch die um ca. 180° gegenüberliegende Anordnung der Schlitze 8a und Flansche 10 am Formteil 1 ist an dessen Aussenumfang dazwischen genügend Platz für die Anordnung der Steckverbindungen 4a, 4b. Die radial durchgehenden Schlitze 8a enden in axialer Richtung mit einer Distanz vor Beginn der Heizwicklung 3a, 3b damit ein, für eine gute Schweissverbindung erforderlicher Druckaufbau der Schmelze beim Schweissvorgang erreicht wird. Auch die mögliche Anordnung einer dünnen verformbaren Wand 13 am Innenumfang beim Schlitz 8a (Siehe Fig. 3 rechts) ermöglicht zusätzlich einen Druckaufbau der Schmelze, da hierdurch ein radialer Austritt von aufgeschmolzenem Material in diesem Bereich vermieden wird.

In Verlängerung der Schlitze 8a sind am Aussenumfang der Schweissmuffen-Partie 2 Einschnitte 8b angeordnet, welche in Längsrichtung in der Tiefe sich verringern und konisch zum Aussenumfang auslaufen. Diese Einschitte ermöglichen auch eine radiale Deformation der Schweissmuffen-Partie 2 beim Verspannen mittels der Schrauben 9, wodurch das Spiel zwischen eingestecktem Rohr und der Heizwicklung 3 für eine gute Schweissverbindung verringert oder beseitigt wird.

Das Formteil 1 kann im Bereich der Klemmpartie 7 eine Wandstärke s aufweisen, welche geringer ist als die Wandsträke S im Bereich der Heizwicklung 3, wobei z.B. die Wandstärke S ca. doppelt so gross sein kann als die Wandstärke s. Dadurch wird erreicht, dass die Klemmpartie 7 mittels den Schrauben 9 leicht verspannbar ist und die Schweiss-Partie eine ausreichende Wandstärke S aufweist, damit am Aussenumfang keine Aufweichung des Materials beim Schweissen erfolgt.

Neben der gezeigten vorteilhaften Anordnung von zwei gegenüberliegenden Schlitzen 8a kann auch nur ein Schlitz mit zwei Flanschen und einer Schraube oder auch mehr als zwei Schlitze mit den entsprechenden Flanschen und Schrauben am Muffenende umfangsmässig angeordnet werden.

Die Fig. 4 zeigt ein Formteil 1a mit nur einer Schweissmuffen-Partie 2 und einem zylindrischen Rohrstück 20 für eine Muffen-Schweissverbindung zur direkten Verbindung mit einem T-Stück oder Winkel.

Das Formteil 1 kann auch als T-Stück mit drei Schweissmuffen-Partien 2 oder als Winkel, Bogen oder Reduziermuffe mit zwei Schweissmuffen-Partien ausgebildet sein.

Zum Fixieren der Rohre im Formteil werden keine zusätzlichen, von der Abmessung des Formteils abhängige Hilfsmittel benötigt, da durch die Anordnung von handelsüblichen Schrauben im Bereich der Einschnitte bzw. Schlitze eine einfach Klemmung des eingesteckten Rohres erreicht wird. Nach erfolgter Schweissung müssen keine Hilfsmittel entfernt werden.

## Patentansprüche

1. Formteil aus thermoplastischen Material mit mindestens einer, eine elektrische Heizwicklung aufweisenden Schweiss-Muffenpartie zur Verbindung des Formteiles mit einem rohrförmigen Teil, wobei das Einsteckende der Schweissmuffen-Partie mindestens mit einem Einschnitt versehen ist und eine Spannvorrichtung zum radialen Vorspannen der Muffenpartie aufweist, dadurch gekennzeichnet, dass im Bereich des Einschnittes (8) am Aussenumfang der Muffenpartie (2) in angeformten Flanschen (10) mindestens eine Schraube (9) zum Zusammenspannen angeordnet ist.

2. Formteil nach Anspruch 1, dadurch gekennzeichnet, dass zwei sich radial gegenüberliegende Einschnitte (8) mit je zwei Flanschen (10) und je einer Schraube (9) angeordnet sind.

3. Formteil nach Anspruch 1 oder 2, dadurch gekennzeichent, dass die Heizwicklung (3) als schraubenförmige Windung anschliessend an eine Klemmpartie (7) am Innenumfang der Schweiss-Muffenpartie (2) angeordnet ist und jeder Einschnitt (8) als bis zum Innenumfang durchgehender Schlitz (8a) ausgebildet ist und axial vom Muffenende bis kurz vor Beginn der Heizwicklung (3) verläuft.

4. Formteil nach Anspruch 3, dadurch gekennzeichnet, dass der Schlitz (8a) am Innenumfang mit einer verformbaren dünnen Wandung (13) versehen ist.

5. Formteil nach Anspruch 3 oder 4, dadurch gekennzeichnet, dass in Verlängerung jedes Schlitzes (8a) ein Einschnitt (8b) im Bereich der Heizwicklung (3) am Aussenumfang angeordnet ist.

6. Formteil nach einem der Ansprüche 3 bis 5, dadurch gekennzeichnet, dass die Wandstärke (s) des Formteiles (1) im Bereich der Klemmpartie (7) geringer ist als die Wandstärke (S) im Bereich der Heizwicklung (3).

7. Formteil nach einem der Ansprüche 1 bis 6, dadurch gekennzeichnet, dass an einem Muffenende umfangsmässig zu dem oder den Einschnitten (8) versetzt zwei Steckkontakte (4a, 4b) nebeneinander angeordnet sind.

8. Formteil nach Anspruch 7, dadurch gekennzeichnet, dass einer der beiden Steckkontakte (4a, 4b) mittels einem, die Heizwicklung (3, 3a, 3b) vorzugsweise mit Distanz kreuzenden Verbindungsleiter (5b) mit dem hinteren Ende der Heizwicklung (3, 3b) verbunden ist.

9. Formteil nach einem der Ansprüche 3 bis 8, dadurch gekennzeichnet, dass die Klemmpartie (7) zylindrisch ausgebildet ist.

10. Formteil nach einem der Ansprüche 3 bis 8, dadurch gekennzeichnet, dass die Klemmpartie (7) konisch ausgebildet ist.

## Claims

1. Moulding of thermoplastic material with at least one welding coupling section having an electrical heating coil for connecting the moulding to a tubular part, the insertion end of the welding coupling section being provided at least with one recess and having a clamping device for the radial pre-tensioning of the coupling section, characterized in that at least one screw (9) for clamping together is arranged in the region of the recess (8) on the outer periphery of the coupling section (2) in moulded-on flanges (10).

2. Moulding according to Claim 1, characterized in that two radially opposite recesses (8) with two flanges (10) in each case and one screw (9) in each case are arranged.

3. Moulding according to Claim 1 or 2, characterized in that the heating coil (3) is arranged in the form of a helical turn adjacent to a clamping section (7) on the inner periphery of the welding coupling section (2) and each recess (8) is in the form of a slot (8a) which is continuous as far as the inner periphery and runs axially from the coupling end until shortly before the beginning of the heating coil (3).

4. Moulding according to Claim 3, characterized in that the slot (8a) is provided with a deformable thin wall (13) on the inner periphery.

5. Moulding according to Claim 3 or 4, characterized in that in extension of each slot (8a) a recess (8b) is arranged in the region of the heating coil (3) on the outer periphery.

6. Moulding according to one of Claims 3 to 5, characterized in that the wall thickness (s) of the moulding (1) in the region of the clamping section (7) is smaller than the wall thickness (S) in the region of the heating coil (3).

7. Moulding according to one of Claims 1 to 6, characterized in that two plug contacts (4a, 4b) are arranged adjacent to each other at one coupling end circumferentially offset with respect to the recess(es) (8).

8. Moulding according to Claim 7, characterized in that one of the two plug contacts (4a, 4b) is connected to the rear end of the heating coil (3, 3b) by means of a connection conductor (5b) crossing the heating coil (3, 3a, 3b) preferably at a distance.

9. Moulding according to one of Claims 3 to 8, characterized in that the clamping section (7) is cylindrical in shape.

10. Moulding according to one of Claims 3 to 8, characterized in that the clamping section (7) is conical in shape.

## Revendications

1. Pièce moulée en matériau thermoplastique, avec au moins une partie formant manchon de soudage, présentant un enroulement de chauffage électrique, pour assurer la liaison de la pièce moulée à une partie tubulaire, l'extrémité d'enfichage de la partie formant manchon de soudage étant pourvue au moins d'une entaille et présentant un dispositif de serrage pour précontraindre radialement la partie formant manchon, caractérisée en ce qu'il est prévu dans la zone d'entaille (8) à la périphérie de la partie de manchon (2), dans des brides moulées (10), au moins une vis (9) pour le serrage d'assemblage.

2. Pièce moulée selon la revendication 1, caractérisée en ce que, sont prévues deux entailles (8) radialement opposées, ayant chacune deux brides (10) et une vis (9).

3. Pièce moulée selon la revendication 1 ou 2, caractérisée en ce que l'enroulement de chauffage (3) est disposé à titre d'enroulement hélicoïdal, faisant suite à une partie de serrage (7), sur la périphérie intérieure de la partie formant manchon de soudage (2), et en ce que chaque entaille (8) est réalisée sous forme de fente (8a), ininterrompue jusqu'à la périphérie intérieure et s'étendant axialement depuis l'extrémité de manchon jusqu'à proximité du début de l'enroulement de chauffage (3).

4. Pièce moulée selon la revendication 3, caractérisée en ce que la fente (8a) est pourvue en périphérie intérieure d'une paroi (13) mince déformable.

5. Pièce moulée selon la revendication 3 ou 4, caractérisée en ce que dans le prolongement de chaque fente (8a), est disposée une entaille (8b), dans la zone de l'enroulement chauffant (3), sur la périphérie extérieure.

6. Pièce moulée selon l'une des revendications 3 à 5, caractérisée en ce que l'épaisseur de paroi (s) de la pièce moulée (1) est inférieure, dans la zone de la partie de serrage (7), à l'épaisseur de paroi (S) dans la zone de l'enroulement chauffant (3).

7. Pièce moulée selon l'une des revendications 1 à 6, caractérisée en ce que sur une extrémité de manchon sont disposés deux contacts d'enfichage (4a, 4b), l'un à coté de l'autre, décalés en périphérie par rapport à la ou aux entaille(s) (8).

8. Pièce moulée selon la revendication 7, caractérisée en ce que l'un des deux contacts d'enfichage (4a, 4b) est relié à l'extrémité arrière de l'enroulement chauffant (3, 3b), au moyen d'un conducteur de liaison (5b) croisant, de préférence à distance, l'enroulement chauffant (3, 3a, 3b).

9. Pièce moulée selon l'une des revendications 3 à 8, caractérisée en ce que la partie de serrage (7) est cylindrique.

10. Pièce moulée selon l'une des revendications 3 à 8, caractérisée en ce que la partie de serrage (7) est conique.
